# EUROPEAN PATENT SPECIFICATION

(11) **EP 4 366 026 B1**
(45) Date of publication and mention of the grant of the patent: **07.10.2026**
(21) Application number: 22832815.9
(22) Date of filing: 15.06.2022
(51) Int. Cl.: H01M 4/13, H01M 4/62, H01M 10/0525, H01M 50/103, H01M 50/107, H01M 10/058

(54) **NON-AQUEOUS ELECTROLYTE SECONDARY BATTERY**
SEKUNDÄRBATTERIE MIT NICHTWÄSSRIGEM ELEKTROLYTEN
BATTERIE SECONDAIRE À ÉLECTROLYTE NON AQUEUX

(30) Priority: 28.06.2021 JP 2021106441
(43) Date of publication of application: 08.05.2024
(73) Proprietor: Panasonic Energy Co., Ltd., Osaka 570-8511 (JP)
(72) Inventor: SAKITANI Nobuhiro, Kadoma-shi, Osaka 571-0057 (JP)
(74) Representative: Novagraaf International SA
(86) International application number: PCT/JP2022/023891
(87) International publication number: WO 2023/276660

(56) References cited:
- JP-A- 2013 235 795
- JP-A- 2013 235 795
- JP-A- 2014 096 269
- JP-A- 2014 096 269
- JP-A- 2015 118 875
- JP-A- 2015 210 979
- JP-A- 2016 048 652
- JP-A- 2016 048 652
- JP-A- 2018 137 101

## Description

### TECHNICAL FIELD

The present disclosure relates to a non-aqueous electrolyte secondary battery.

### BACKGROUND ART

In recent years, as a secondary battery having a high output and a high energy density, a non-aqueous electrolyte secondary battery which includes a positive electrode, a negative electrode, and a non-aqueous electrolyte and performs charge and discharge by moving lithium ions and the like between the positive electrode and the negative electrode is widely used.

For example, Patent Literatures 1 to 3 propose that an electrode using a plurality of binders having different swelling degrees in the electrolyte is used as an electrode for a non-aqueous electrolyte secondary battery. Further relevant patent prior art is comprised in JP 2013-235795 A, JP 2014-096269 A and JP 2016-048652 A.

### CITATION LIST

### PATENT LITERATURE

Patent Literature 1: JP 2012-182012 A
Patent Literature 2: JP 2012-054147 A
Patent Literature 3: JP 2014-096269 A

### SUMMARY

### TECHNICAL PROBLEM

An object of the present disclosure is to provide a non-aqueous electrolyte secondary battery capable of improving charge-discharge cycle characteristics.

### SOLUTIONS TO PROBLEM

A non-aqueous electrolyte secondary battery according to one aspect of the present disclosure is a non-aqueous electrolyte secondary battery including an electrode assembly in which a positive electrode and a negative electrode face each other with a separator interposed therebetween, and a battery case that houses the electrode assembly, in which the positive electrode includes a positive electrode mixture layer containing a binder, and the negative electrode includes a negative electrode mixture layer containing a binder, and when the non-aqueous electrolyte secondary battery is used in a fixed state, and the electrode assembly in the fixed state is divided into two equal parts of an upper half region and a lower half region in the vertical direction, in at least one of the positive electrode and the negative electrode, swelling degree in an electrolyte of the binder disposed in the upper half region is higher than swelling degree in the electrolyte of the binder disposed in the lower half region.

Further, a non-aqueous electrolyte secondary battery according to one aspect of the present disclosure is a non-aqueous electrolyte secondary battery including an electrode assembly in which a positive electrode and a negative electrode face each other with a separator interposed therebetween, a bottomed cylindrical exterior can that houses the electrode assembly, and a sealing assembly that closes an opening of the exterior can, in which the positive electrode includes a positive electrode mixture layer containing a binder, and the negative electrode includes a negative electrode mixture layer containing a binder, and in at least one of the positive electrode and the negative electrode, when the electrode assembly is divided into two equal parts of a half region on a sealing assembly side and a half region on a bottom side of the exterior can in the insertion direction into the exterior can, in at least one of the positive electrode and the negative electrode, swelling degree in an electrolyte of the binder disposed in the half region on the sealing assembly side is higher than swelling degree in the electrolyte of the binder disposed in the half region on the bottom side of the exterior can.

Also, a non-aqueous electrolyte secondary battery according to one aspect of the present disclosure includes a non-aqueous electrolyte secondary battery including an electrode assembly in which a positive electrode and a negative electrode face each other with a separator interposed therebetween, a bottomed cylindrical exterior can that houses the electrode assembly, and a sealing assembly that closes an opening of the exterior can, in which the positive electrode includes a positive electrode mixture layer containing a binder, and the negative electrode includes a negative electrode mixture layer containing a binder, and when the electrode assembly is divided into two equal parts of a half region on a sealing assembly side and a half region on a bottom side of the exterior can in the insertion direction into the exterior can, in at least one of the positive electrode and the negative electrode, swelling degree in an electrolyte of the binder disposed in the half region on the bottom side of the exterior can is higher than swelling degree in the electrolyte of the binder disposed in the half region on the sealing assembly side.

### ADVANTAGEOUS EFFECTS OF INVENTION

According to one aspect of the present disclosure, charge-discharge cycle characteristics can be improved.

### BRIEF DESCRIPTION OF DRAWINGS

FIG. 1 is a cross-sectional view of a non-aqueous electrolyte secondary battery as an example of an embodiment.
FIG. 2 is a side view illustrating a state in which the non-aqueous electrolyte secondary battery illustrated in FIG. 1 is fixed.
FIG. 3 is a perspective view of a wound electrode assembly used in the non-aqueous electrolyte secondary battery of FIG. 2.
FIG. 4 is a side view illustrating another example of a state in which the non-aqueous electrolyte secondary battery illustrated in FIG. 1 is fixed.
FIG. 5 is a perspective view of a wound electrode assembly used in the non-aqueous electrolyte secondary battery of FIG. 4.

### DESCRIPTION OF EMBODIMENTS

An example of the embodiment will be described with reference to the drawings. The non-aqueous electrolyte secondary battery of the present disclosure is not limited to the embodiment described below. The drawings referred to in the description of the embodiment are schematically illustrated.

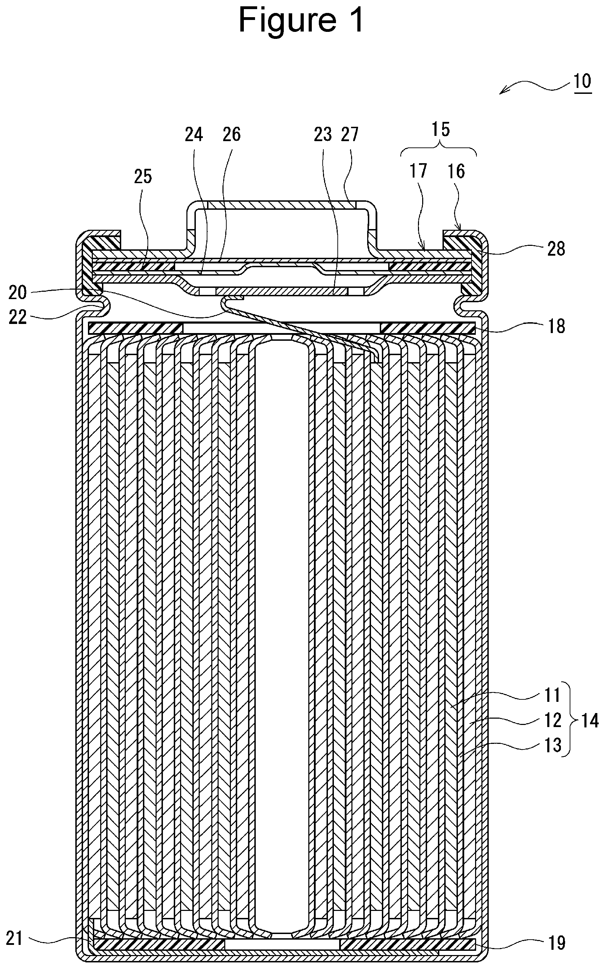

FIG. 1 is a cross-sectional view of a non-aqueous electrolyte secondary battery as an example of the embodiment. A non-aqueous electrolyte secondary battery 10 illustrated in FIG. 1 includes a wound electrode assembly 14 formed by winding a positive electrode 11 and a negative electrode 12 with a separator 13 interposed therebetween, a non-aqueous electrolyte, insulating plates 18 and 19 respectively disposed above and below the electrode assembly 14, and a battery case 15 that houses the above-described members. The battery case 15 includes an exterior can 16 and a sealing assembly 17 that closes an opening of the exterior can 16. Instead of the wound electrode assembly 14, another form of electrode assembly such as a stacked electrode assembly formed by alternately stacking positive electrodes and negative electrodes with a separator interposed therebetween may be applied. Examples of the battery case 15 include a bottomed cylindrical exterior can having a cylindrical shape, a rectangular shape, a coin shape, a button shape, or the like, and a pouch exterior package formed by laminating a resin sheet and a metal sheet.

The exterior can 16 is, for example, a bottomed cylindrical metal case. A gasket 28 is provided between the exterior can 16 and the sealing assembly 17 to ensure sealability of the inside of the battery. The exterior can 16 has, for example, a projecting portion 22 supporting the sealing assembly 17, and a part of a side face of the exterior can 16 projects inward to form the projecting portion 22. The projecting portion 22 is preferably formed in an annular shape along the circumferential direction of the exterior can 16, and supports the sealing assembly 17 on the upper face thereof.

The sealing assembly 17 has a structure in which a filter 23, a lower vent member 24, an insulating member 25, an upper vent member 26, and a cap 27 are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at the central portions of respective members, and the insulating member 25 is interposed between the peripheral parts of respective members. When the internal pressure of the non-aqueous electrolyte secondary battery 10 increases due to heat generated by an internal short circuit or the like, the lower vent member 24 deforms so as to push up the upper vent member 26 toward the cap 27 and breaks, and the current path between the lower vent member 24 and the upper vent member 26 is cut off, for example. When the internal pressure further increases, the upper vent member 26 breaks, and the gas is discharged from an opening of the cap 27.

In the non-aqueous electrolyte secondary battery 10 illustrated in FIG. 1, a positive electrode lead 20 attached to the positive electrode 11 extends to the sealing assembly 17 side through the through hole of the insulating plate 18, and a negative electrode lead 21 attached to the negative electrode 12 extends to the bottom side of the exterior can 16 through the outside of the insulating plate 19. The positive electrode lead 20 is connected to a lower face of the filter 23 which is a bottom plate of the sealing assembly 17 by welding or the like, and the cap 27 which is a top plate of the sealing assembly 17 electrically connected to the filter 23 serves as a positive electrode terminal. The negative electrode lead 21 is connected to the inner face of the bottom of the exterior can 16 by welding or the like, and the exterior can 16 serves as a negative electrode terminal.

In the present embodiment, the sealing assembly 17 is the upper face of the battery case 15, the face of the exterior can 16 facing the sealing assembly 17 is the bottom face of the battery case 15, and the side face connecting the upper face and the bottom face is the side face of the battery case 15. The direction from the bottom face to the upper face of the battery case 15 is defined as the height direction of the non-aqueous electrolyte secondary battery 10.

Hereinafter, each component of the non-aqueous electrolyte secondary battery 10 will be described in detail.

### [Positive Electrode]

The positive electrode 11 includes a positive electrode current collector and a positive electrode mixture layer provided on the positive electrode current collector. A foil of a metal which is stable in the potential range of the positive electrode 11, such as aluminum, a film in which the metal is disposed on a surface layer thereof, or the like can be used for the positive electrode current collector. The positive electrode mixture layer contains a positive electrode active material, and a binder, and contains additives such as a conductive agent as necessary.

Examples of the positive electrode active material include lithium-metal composite oxides containing transition metal elements such as Co, Mn, and Ni. Examples of the lithium-metal composite oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3). These may be independently used, or two or more thereof may be used in combination. The positive electrode active material preferably contains a lithium-nickel composite oxide such as LiₓNiO₂, LiₓCo_{y}Ni_{1-y}O₂, or LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3) from the viewpoint of achieving increase in the capacity of the non-aqueous electrolyte secondary battery.

As the binder, for example, a fluorine-based resin such as polytetrafluoroethylene (PTFE) or polyvinylidene fluoride (PVDF), polyacrylonitrile (PAN), polyimide (PI), an acrylic resin, a polyolefin-based resin, styrene-butadiene rubber (SBR), nitrile rubber (NBR), carboxymethyl cellulose (CMC) or a salt thereof, polyacrylic acid (PAA) or a salt thereof, polyvinyl alcohol (PVA), or the like can be used. These may be independently used, or two or more thereof may be used in combination. The content of the binder in the positive electrode mixture layer is, for example, preferably greater than or equal to 0.5% by mass and less than or equal to 10% by mass, and more preferably greater than or equal to 1% by mass and less than or equal to 5% by mass.

Examples of the conductive agent include carbon particles such as carbon black (CB), acetylene black (AB), Ketjenblack, carbon nanotube (CNT), and graphite. These may be independently used, or two or more thereof may be used in combination.

### [Negative Electrode]

The negative electrode 12 includes a negative electrode current collector and a negative electrode mixture layer provided on the negative electrode current collector. For example, a foil of a metal which is stable within the potential range of the negative electrode, such as copper, a film in which the metal is disposed on a surface layer thereof, or the like is used for the negative electrode current collector. The negative electrode mixture layer contains a negative electrode active material, and a binder, and contains additives such as a conductive agent as necessary.

The negative electrode active material is capable of reversibly absorbing and releasing lithium ions, and examples thereof include carbon materials such as natural graphite and artificial graphite; metals alloyed with lithium, such as silicon (Si) and tin (Sn); alloys containing metal elements such as Si and Sn; and composite oxides.

Examples of the binder include a fluorine-based resin such as polytetrafluoroethylene (PTFE) or polyvinylidene fluoride (PVDF), polyacrylonitrile (PAN), polyimide (PI), an acrylic resin, a polyolefin-based resin, styrene-butadiene rubber (SBR), nitrile rubber (NBR), carboxymethyl cellulose (CMC) or a salt thereof, polyacrylic acid (PAA) or a salt thereof, polyvinyl alcohol (PVA), and the like. These may be independently used, or two or more thereof may be used in combination. The content of the binder in the negative electrode mixture layer is, for example, preferably greater than or equal to 0.5% by mass and less than or equal to 10% by mass, and more preferably greater than or equal to 1% by mass and less than or equal to 5% by mass.

Examples of the conductive agent include carbon particles such as carbon black (CB), acetylene black (AB), Ketjenblack, carbon nanotube (CNT), and graphite. These may be independently used, or two or more thereof may be used in combination.

In the present embodiment, a plurality of binders having different swelling degrees with the electrolyte are used in at least one of the positive electrode 11 and the negative electrode 12. Hereinafter, a specific description will be given.

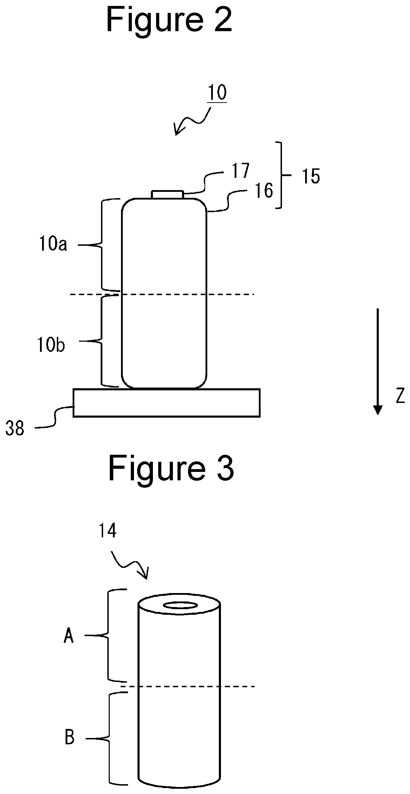

FIG. 2 is a side view illustrating a state in which the non-aqueous electrolyte secondary battery illustrated in FIG. 1 is fixed. The non-aqueous electrolyte secondary battery of the present embodiment is desirably used as an installed type or stationary power source installed indoors or outdoors, or a power source installed in a movable object such as an electric vehicle. As illustrated in FIG. 2, the non-aqueous electrolyte secondary battery 10 used as such a power source is installed and used in a fixed state on a fixing portion 38 such as a mounting table, a case, or the like. The phrase "used in a fixed state" means that the orientation of the non-aqueous electrolyte secondary battery 10 is not significantly changed after the non-aqueous electrolyte secondary battery 10 is installed in the fixing portion 38 and started to be used. For example, a non-aqueous electrolyte secondary battery used as a power source of a mobile phone is not included in the case of being used in a fixed state because it is placed in any orientation with use of the mobile phone.

In FIG. 2, an arrow Z indicates the vertical direction (gravity direction). That is, the non-aqueous electrolyte secondary battery 10 illustrated in FIG. 2 is provided to stand along the vertical direction. More specifically, the non-aqueous electrolyte secondary battery 10 illustrated in FIG. 2 is installed such that the bottom of the battery case 15 is in contact with the fixing portion 38, and the height direction of the non-aqueous electrolyte secondary battery 10 is along the vertical direction.

FIG. 3 is a perspective view of a wound electrode assembly used in the non-aqueous electrolyte secondary battery of FIG. 2. Here, a region A of the electrode assembly 14 illustrated in FIG. 3 is a region corresponding to an upper half region 10a when the electrode assembly 14 housed in the non-aqueous electrolyte secondary battery 10 illustrated in FIG. 2 is divided into two equal parts in the vertical direction. A region B of the electrode assembly 14 illustrated in FIG. 3 is a region corresponding to a lower half region 10b when the electrode assembly 14 housed in the non-aqueous electrolyte secondary battery 10 illustrated in FIG. 2 is divided into two equal parts in the vertical direction.

In at least one of the positive electrode 11 and the negative electrode 12, swelling degree in the electrolyte of the binder disposed in the region A illustrated in FIG. 3 (that is, the upper half region 10a illustrated in FIG. 2) is higher than swelling degree in the electrolyte of the binder disposed in the region B illustrated in FIG. 3 (that is, the lower half region 10b illustrated in FIG. 2). Since the height direction of the non-aqueous electrolyte secondary battery 10 illustrated in FIG. 2 is along the vertical direction, the vertical direction can be rephrased as the height direction of the non-aqueous electrolyte secondary battery 10. That is, when the electrode assembly 14 is divided into two equal parts of the upper half region and the lower half region in the height direction of the non-aqueous electrolyte secondary battery 10, in at least one of the positive electrode 11 and the negative electrode 12, the swelling degree in the electrolyte of the binder disposed in the upper half region is higher than the swelling degree in the electrolyte of the binder disposed in the lower half region.

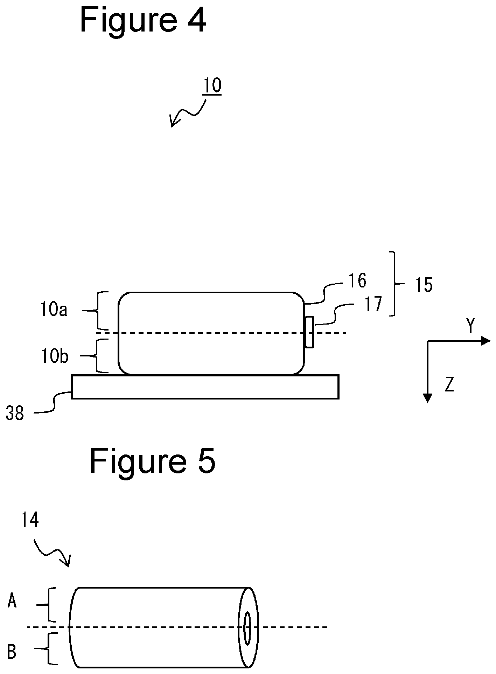

FIG. 4 is a side view illustrating another example of a state in which the non-aqueous electrolyte secondary battery illustrated in FIG. 1 is fixed. In FIG. 4, an arrow Z indicates the vertical direction (gravity direction), and an arrow Y indicates the direction (horizontal direction) orthogonal to the vertical direction. The non-aqueous electrolyte secondary battery 10 illustrated in FIG. 4 is installed such that the side face of the battery case 15 is in contact with the fixing portion 38, and the height direction of the non-aqueous electrolyte secondary battery 10 is along the direction (horizontal direction) orthogonal to the vertical direction.

FIG. 5 is a perspective view of a wound electrode assembly used in the non-aqueous electrolyte secondary battery of FIG. 4. Here, the region A of the electrode assembly 14 illustrated in FIG. 5 is a region corresponding to the upper half region 10a when the electrode assembly 14 housed in the non-aqueous electrolyte secondary battery 10 illustrated in FIG. 4 is divided into two equal parts in the vertical direction. The region B of the electrode assembly 14 illustrated in FIG. 5 is a region corresponding to the lower half region 10b when the electrode assembly 14 housed in the non-aqueous electrolyte secondary battery 10 illustrated in FIG. 4 is divided into two equal parts in the vertical direction.

In at least one of the positive electrode 11 and the negative electrode 12, the swelling degree in the electrolyte of the binder disposed in the region A illustrated in FIG. 5 (that is, the upper half region 10a illustrated in FIG. 4) is higher than the swelling degree in the electrolyte of the binder disposed in the region B illustrated in FIG. 5 (that is, the lower half region 10b illustrated in FIG. 4).

In the non-aqueous electrolyte secondary battery 10 used in a fixed state, the non-aqueous electrolyte in the battery case 15 is unevenly distributed in the lower part in the vertical direction by gravity, and the non-aqueous electrolyte is easily depleted in the upper part in the vertical direction. When the non-aqueous electrolyte is unevenly distributed as described above, charge-discharge cycle characteristics are deteriorated. However, as in the non-aqueous electrolyte secondary battery 10 of the present embodiment, in at least one of the positive electrode 11 and the negative electrode 12, retention characteristics of the non-aqueous electrolyte is improved above in the vertical direction by making the swelling degree in the electrolyte of the binder disposed in the upper half region 10a higher than the swelling degree in the electrolyte of the binder disposed in the lower half region 10b. Therefore, the non-aqueous electrolyte is suppressed from being unevenly distributed in the lower part in the vertical direction, and the charge-discharge cycle characteristics can be improved accordingly. In the above description, a non-aqueous electrolyte secondary battery including a bottomed cylindrical battery case having a cylindrical shape and a wound electrode assembly has been described as an example. However, the same effect can be obtained even in the case of a non-aqueous electrolyte secondary battery including a bottomed cylindrical battery case having a rectangular shape, a stacked electrode assembly, or the like.

In the present embodiment, in at least one of the positive electrode 11 and the negative electrode 12, the binder disposed in the upper half region 10a has a swelling degree in the electrolyte of preferably greater than or equal to 150% and less than or equal to 250%, and more preferably greater than or equal to 170% and less than or equal to 230% from the viewpoint of improving charge-discharge cycle characteristics, and the like. In addition, in the present embodiment, in at least one of the positive electrode 11 and the negative electrode 12, the binder disposed in the lower half region 10b has a swelling degree in the electrolyte of preferably greater than or equal to 100% and less than or equal to 200%, and more preferably greater than or equal to 120% and less than or equal to 180% from the viewpoint of improving charge-discharge cycle characteristics, and the like.

The non-aqueous electrolyte secondary battery 10 illustrated in FIG. 2 is fixed such that the bottom of the exterior can 16 is in contact with the fixing portion 38. In this case, when the electrode assembly 14 is divided into two equal parts of a half region on the sealing assembly 17 side and a half region on the bottom side of the exterior can 16 in the insertion direction into the exterior can 16, in at least one of the positive electrode 11 and the negative electrode 12, the swelling degree in the electrolyte of the binder disposed in the half region on the sealing assembly 17 side is made higher than the swelling degree in the electrolyte of the binder disposed in the half region on the bottom side of the exterior can 16. Also, when the battery case 15 includes the bottomed cylindrical exterior can 16 and the sealing assembly 17, the non-aqueous electrolyte secondary battery 10 can be fixed such that the sealing assembly 17 is in contact with the fixing portion 38 instead of the bottom of the exterior can 16. In this case, when the electrode assembly 14 is divided into two equal parts of a half region on the sealing assembly 17 side and a half region on the bottom side of the exterior can 16 in the insertion direction into the exterior can 16, in at least one of the positive electrode 11 and the negative electrode 12, the swelling degree in the electrolyte of the binder disposed in the half region on the bottom side of the exterior can 16 is made higher than the swelling degree in the electrolyte of the binder disposed in the half region on the sealing assembly 17 side. This improves the charge-discharge cycle characteristics of the non-aqueous electrolyte secondary battery 10.

An example of a method for producing the positive electrode 11 and the negative electrode 12 will be described. The term "electrode" described below refers to a positive electrode and/or a negative electrode, the term "mixture layer" refers to a positive electrode mixture layer and/or a negative electrode mixture layer, the term "active material" refers to a positive electrode active material and/or a negative electrode active material, and the term "current collector" refers to a positive electrode current collector and/or a negative electrode mixture layer. For example, an active material, a binder, an arbitrary conductive agent, and the like are mixed together with a solvent to prepare a slurry B for the lower half region 10b. In addition, the active material, the binder having a higher swelling degree in the electrolyte than the binder used in the slurry B, an arbitrary conductive agent, and the like are mixed together with a solvent to prepare a slurry A for the upper half region 10a. The content of the binder in each of the slurry A and the slurry B is, for example, preferably greater than or equal to 0.5% by mass and less than or equal to 10% by mass, and more preferably greater than or equal to 1% by mass and less than or equal to 5% by mass. For example, in the case of the non-aqueous electrolyte secondary battery used in the state illustrated in FIG. 2, the slurries A and B are applied so as to be along the longitudinal direction of the current collector, and be adjacent to each other in the width direction orthogonal to the longitudinal direction. In the case of the non-aqueous electrolyte secondary battery used in the state illustrated in FIG. 4, the slurries A and B are alternately applied in a predetermined length along the longitudinal direction of the current collector. The applied slurry is then dried, and the coated film (mixture layer) is rolled to form an electrode of the present embodiment. By using the electrode formed as described above, when the electrode assembly is divided into two equal parts of the upper half region and the lower half region in the vertical direction in a state where the non-aqueous electrolyte secondary battery is fixed, the swelling degree in the electrolyte of the binder disposed in the upper half region can be made higher than the swelling degree in the electrolyte of the binder disposed in the lower half region. Alternatively, when the electrode assembly is divided into two equal parts of the half region on the sealing assembly side and the half region on the bottom side of the exterior can in the insertion direction into the exterior can, the swelling degree in the electrolyte of the binder disposed in the half region on the sealing assembly side can be made higher than the swelling degree in the electrolyte of the binder disposed in the half region on the bottom side of the exterior can, or the swelling degree in the electrolyte of the binder disposed in the half region on the bottom side of the exterior can can be made higher than the swelling degree in the electrolyte of the binder disposed in the half region on the sealing assembly side.

The swelling degree of the binder can be adjusted, for example, by selecting the type and amount of a monomer for producing the binder in consideration of the SP value (solubility parameter) of the non-aqueous electrolyte. Further, for example, as shown in Patent Literature 1, since the swelling degree varies depending on the type of the binder, a binder having a different swelling degree may be selected. Furthermore, for example, when styrene-butadiene rubber (SBR) is used as the binder, the swelling degree increases when acrylonitrile is added to a constituent monomer of SBR. Therefore, when styrene-butadiene rubber (SBR) is used for the binder, the content of acrylonitrile may be adjusted to adjust the swelling degree in the electrolyte of the binder.

### [Separator]

A porous sheet having ion permeability and insulation properties is used as the separator 13, for example. Specific examples of the porous sheet include a fine porous thin film, a woven fabric, and a nonwoven fabric. As material of the separator, olefin-based resin such as polyethylene or polypropylene, cellulose, or the like is suitable. The separator 13 may be a layered body having a cellulose fiber layer and a fiber layer of thermoplastic resin such as olefin-based resin. **In** addition, the separator 13 may be a multilayer separator having a polyethylene layer and a polypropylene layer, and a separator having a surface coated with a material such as aramid-based resin or ceramic may be used.

### [Non-Aqueous Electrolyte]

The non-aqueous electrolyte contains a non-aqueous solvent and an electrolyte salt dissolved in the non-aqueous solvent. Examples of the non-aqueous solvent that can be used include esters, ethers, nitriles such as acetonitrile, amides such as dimethylformamide, and mixed solvents of two or more types thereof. The non-aqueous solvent may contain a halogen-substituted product in which at least a part of hydrogen in these solvents is substituted with a halogen atom such as fluorine.

Examples of the esters include cyclic carbonic acid esters such as ethylene carbonate (EC), propylene carbonate (PC), and butylene carbonate; chain carbonic acid esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone and γ-valerolactone; and chain carboxylic acid esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen-substituted product, it is preferable to use a fluorinated cyclic carbonic acid ester such as fluoroethylene carbonate (FEC), a fluorinated chain carbonic acid ester, a fluorinated chain carboxylic acid ester such as methyl fluoropropionate (FMP), or the like.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ(1 < x < 6, n is 1 or 2), LiB₁₀Cl₁₀, LiCl, LiBr, LiI, chloroborane lithium, lower aliphatic lithium carboxylate, borates such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {l and m are each an integer of 1 or more}. These lithium salts may be independently used, or two or more thereof may be used in combination. Among them, LiPF₆ is preferably used from the viewpoint of ion conductivity, electrochemical stability, and the like. The concentration of the lithium salt is preferably 0.8 to 1.8 mol per 1 L of the solvent.

### EXAMPLES

Hereinafter, the present disclosure will be further described with reference to examples, but the present disclosure is not limited to these examples.

### <Example>

### [Production of Positive Electrode]

95 Parts by mass of LiNi_{0.8}Co_{0.15}Al_{0.05}O₂, 2.5 parts by mass of acetylene black (AB), and 2.5 parts by mass of polyvinylidene fluoride (PVDF) having an average molecular weight of 1,100,000 were mixed, and an appropriate amount of N-methyl-2-pyrrolidone (NMP) was added thereto to prepare a positive electrode mixture slurry with a solid content of 70% by mass. Next, the positive electrode mixture slurry was applied to both surfaces of a strip-shaped positive electrode current collector made of an aluminum foil having a thickness of 15 µm, and the coated film was heated to 100°C to 150°C and dried. The dried coated film was compressed using a roller and then cut into a predetermined electrode plate size to produce a positive electrode in which a positive electrode mixture layer was formed on both surfaces of the positive electrode current collector. A positive electrode exposed portion where the positive electrode mixture layer did not exist and the surface of the positive electrode current collector was exposed was provided at a substantially central portion in the longitudinal direction of the positive electrode, and an aluminum positive electrode lead was welded to the positive electrode exposed portion.

### [Production of Negative Electrode]

95 Parts by mass of graphite, 5 parts by mass of Si oxide (SiO), 1 part by mass of carboxymethyl cellulose (CMC), and an appropriate amount of water were mixed. To this mixture, 1.5 parts by mass of styrene-butadiene rubber (SBR) having a swelling degree in the electrolyte of 250% were mixed to prepare a first negative electrode mixture slurry. Moreover, 95 parts by mass of graphite, 5 parts by mass of Si oxide (SiO), 1 part by mass of carboxymethyl cellulose (CMC), and an appropriate amount of water were mixed. To this mixture, 1.5 parts by mass of styrene-butadiene rubber (SBR) having a swelling degree in the electrolyte of 100% were mixed to prepare a second negative electrode mixture slurry. The swelling degree in the electrolyte of the binder was calculated by drying the binder dispersed in a solvent to prepare a film, immersing the film in a non-aqueous electrolyte for 24 hours, measuring the mass before and after the immersion, and applying the measured mass to the following formula. The non-aqueous electrolyte is an electrolyte used in the secondary battery, and specifically, is an electrolyte described in the paragraph of [Preparation of Non-Aqueous Electrolyte] below. 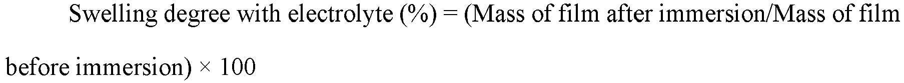 Swelling degree with electrolyte (%) = (Mass of film after immersion/Mass of film before immersion) × 100

The first negative electrode mixture slurry and the second negative electrode mixture slurry were applied to both surfaces of a strip-shaped negative electrode current collector made of a copper foil in a stripe shape so as to be adjacent to each other along the longitudinal direction of the copper foil and in the width direction orthogonal to the longitudinal direction. Thereafter, the coated film was dried, and the dried coated film was compressed using a roller, and then cut into a predetermined electrode plate size to produce a negative electrode in which a negative electrode mixture layer was formed on both surfaces of the negative electrode current collector. A negative electrode exposed portion where the negative electrode mixture layer did not exist and the surface of the negative electrode current collector was exposed was provided at a starting end, and a negative electrode lead made of nickel/copper was welded to the negative electrode exposed portion.

### [Preparation of Non-Aqueous Electrolyte]

LiPF₆ was dissolved in a mixed solvent of ethylene carbonate (EC), dimethyl carbonate (DMC), and diethyl carbonate (DEC) to prepare a non-aqueous electrolyte.

### [Production of Non-Aqueous Electrolyte Secondary Battery]

(1) The positive electrode and the negative electrode were wound with a polyethylene separator having a thickness of 20 µm interposed therebetween, to produce a wound electrode assembly.
(2) The electrode assembly was inserted into an exterior can, the negative electrode lead was welded to the bottom of the exterior can, and the positive electrode lead was welded to a sealing assembly. The electrode assembly was inserted into the exterior can such that, when the electrode assembly was divided into two equal parts in the height direction of the non-aqueous electrolyte secondary battery, the negative electrode mixture layer disposed in the upper half region was derived from the first negative electrode mixture slurry, and the negative electrode mixture layer disposed in the lower half region was derived from the second negative electrode mixture slurry.
(3) The non-aqueous electrolyte was injected into the exterior can, and then the opening end of the exterior can was crimped to the sealing assembly with a gasket interposed therebetween. This was used as a non-aqueous electrolyte secondary battery.

### <Comparative Example 1>

A non-aqueous electrolyte secondary battery was produced in the same manner as in Example except that styrene-butadiene rubber (SBR) having a swelling degree in the electrolyte of 100% was used as a binder used in the first negative electrode mixture slurry, and styrene-butadiene rubber (SBR) having a swelling degree in the electrolyte of 250% was used as a binder used in the second negative electrode mixture slurry.

### <Comparative Example 2>

A non-aqueous electrolyte secondary battery was produced in the same manner as in Example except that the first negative electrode mixture slurry was applied to the entire negative electrode current collector using only the first negative electrode mixture slurry.

### <Comparative Example 3>

A non-aqueous electrolyte secondary battery was produced in the same manner as in Example except that the second negative electrode mixture slurry was applied to the entire negative electrode current collector using only the second negative electrode mixture slurry.

### [Evaluation of Charge-Discharge Cycle Characteristics]

The non-aqueous electrolyte secondary batteries of Example and Comparative Examples 1 to 3 were each installed on the mounting table such that the bottom of the non-aqueous electrolyte secondary battery was brought into contact with the mounting table, and the height direction of the battery was along the vertical direction. Then, each of the non-aqueous electrolyte secondary batteries was charged at a constant current of 0.7 It under a temperature environment of 25°C until the voltage reached 4.2 V, and then charged at a constant voltage of 4.2 V until the current reached 0.05 It. The battery was then discharged at a constant current of 0.7 It until the voltage reached 2.5 V. This charge-discharge cycle was defined as 1 cycle, 1,000 cycles were performed, and the capacity retention rate was determined by the following formula. 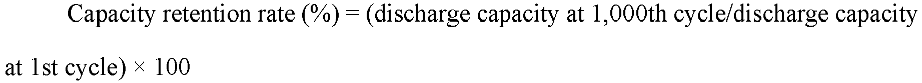 Capacity retention rate (%) = (discharge capacity at 1,000th cycle/discharge capacity at 1st cycle) × 100

Table 1 summarizes the results of the charge-discharge cycle characteristics of Example and Comparative Examples 1 to 3.

**[Table 1]**

| | Swelling degree in electrolyte of binder (%) | | Capacity retention rate |
|---|---|---|---|
| | Upper half region | Lower half region | |
| Example 1 | 250 | 100 | 74% |
| Comparative Example 1 | 100 | 250 | 61% |
| Comparative Example 2 | 250 | | 67% |
| Comparative Example 3 | 100 | | 65% |

In Example, the capacity retention rates in the charge-discharge cycles were higher than those in Comparative Examples 1 to 3. Therefore, as in Example, when the non-aqueous electrolyte secondary battery is used in the fixed state, and the electrode assembly in the fixed state is divided into two equal parts of the upper half region and the lower half region in the vertical direction, the charge-discharge cycle characteristics can be improved by making the swelling degree in the electrolyte of the binder disposed in the upper half region higher than the swelling degree in the electrolyte of the binder disposed in the lower half region.

### REFERENCE SIGNS LIST

- 10: Non-aqueous electrolyte secondary battery
- 10a: Upper half region
- 10b: Lower half region
- 11: Positive electrode
- 12: Negative electrode
- 13: Separator
- 14: Electrode assembly
- 15: Battery case
- 16: Exterior can
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 38: Fixing portion

## Claims

1. A non-aqueous electrolyte secondary battery (10) comprising an electrode assembly (14) in which a positive electrode (11) and a negative electrode (12) face each other with a separator (13) interposed therebetween, and a battery case (15) that houses the electrode assembly (14), wherein
the positive electrode (11) includes a positive electrode mixture layer containing a binder, and the negative electrode (12) includes a negative electrode mixture layer containing a binder, and
when the non-aqueous electrolyte secondary battery (10) is used in a fixed state, and the electrode assembly (14) in the fixed state is divided into two equal parts of an upper half region (10a) and a lower half region (10b) in the vertical direction, in at least one of the positive electrode (11) and the negative electrode (12), swelling degree in an electrolyte of the binder disposed in the upper half region (10a) is higher than swelling degree in the electrolyte of the binder disposed in the lower half region (10b).

2. The non-aqueous electrolyte secondary battery (10) according to claim 1, wherein the binder disposed in the upper half region (10a) has a swelling degree in the electrolyte of greater than or equal to 150% and less than or equal to 250%, and the binder disposed in the lower half region (10b) has a swelling degree in the electrolyte of greater than or equal to 100% and less than or equal to 200%.

3. A non-aqueous electrolyte secondary battery (10) comprising an electrode assembly (14) in which a positive electrode (11) and a negative electrode (12) face each other with a separator (13) interposed therebetween, a bottomed cylindrical exterior can (16) that houses the electrode assembly (14), and a sealing assembly (17) that closes an opening of the exterior can (16), wherein
the positive electrode (11) includes a positive electrode mixture layer containing a binder, and the negative electrode (12) includes a negative electrode mixture layer containing a binder, and
when the electrode assembly (14) is divided into two equal parts of a half region on the sealing assembly (17) side and a half region on a bottom side of the exterior can (16) in the insertion direction into the exterior can (16), in at least one of the positive electrode (11) and the negative electrode (12), swelling degree in an electrolyte of the binder disposed in the half region on the sealing assembly (17) side is higher than swelling degree in the electrolyte of the binder disposed in the half region on the bottom side of the exterior can (16).

4. The non-aqueous electrolyte secondary battery (10) according to claim 3, wherein the binder disposed in the half region on the sealing assembly (17) side has a swelling degree in the electrolyte of greater than or equal to 150% and less than or equal to 250%, and the binder disposed in the half region on the bottom side of the exterior can (16) has a swelling degree in the electrolyte of greater than or equal to 100% and less than or equal to 200%.

5. A non-aqueous electrolyte secondary battery (10) comprising an electrode assembly (14) in which a positive electrode (11) and a negative electrode (12) face each other with a separator (13) interposed therebetween, a bottomed cylindrical exterior can (16) that houses the electrode assembly (14), and a sealing assembly (17) that closes an opening of the exterior can (16), wherein
the positive electrode (11) includes a positive electrode mixture layer containing a binder, and the negative electrode (12) includes a negative electrode mixture layer containing a binder, and
when the electrode assembly (14) is divided into two equal parts of a half region on a sealing assembly (17) side and a half region on a bottom side of the exterior can (16) in the insertion direction into the exterior can (16), in at least one of the positive electrode (11) and the negative electrode (12), swelling degree in an electrolyte of the binder disposed in the half region on the bottom side of the exterior can (16) is higher than swelling degree in the electrolyte of the binder disposed in the half region on the sealing assembly (17) side.

6. The non-aqueous electrolyte secondary battery (10) according to claim 5, wherein the binder disposed in the half region on the bottom side of the exterior can (16) has a swelling degree in the electrolyte of greater than or equal to 150% and less than or equal to 250%, and the binder disposed in the half region on the sealing assembly (17) side has a swelling degree in the electrolyte of greater than or equal to 100% and less than or equal to 200%.

## Patentansprüche

1. Sekundärbatterie mit nichtwässrigem Elektrolyt (10), umfassend eine Elektrodenanordnung (14), in der eine positive Elektrode (11) und eine negative Elektrode (12) einander mit einem dazwischen angeordneten Separator (13) gegenüberliegen, und ein Batteriegehäuse (15), das die Elektrodenanordnung (14) aufnimmt, wobei
die positive Elektrode (11) eine positive Elektrodenmischungsschicht, die ein Bindemittel enthält, umfasst, und die negative Elektrode (12) eine negative Elektrodenmischungsschicht, die ein Bindemittel enthält, umfasst, und
wenn die Sekundärbatterie mit nichtwässrigem Elektrolyt (10) in einem fixierten Zustand verwendet wird und die Elektrodenanordnung (14) im fixierten Zustand in zwei gleiche Teile eines oberen Halbbereichs (10a) und eines unteren Halbbereichs (10b) in vertikaler Richtung geteilt wird, in mindestens einer der positiven Elektrode (11) und der negativen Elektrode (12) der Quellungsgrad in einem Elektrolyten des im oberen Halbbereich (10a) angeordneten Bindemittels höher ist als der Quellungsgrad im Elektrolyten des im unteren Halbbereich (10b) angeordneten Bindemittels.

2. Sekundärbatterie mit nichtwässrigem Elektrolyt (10) nach Anspruch 1, wobei das im oberen Halbbereich (10a) angeordnete Bindemittel einen Quellungsgrad im Elektrolyten von größer oder gleich 150 % und kleiner oder gleich 250 % aufweist, und das im unteren Halbbereich (10b) angeordnete Bindemittel einen Quellungsgrad im Elektrolyten von größer oder gleich 100 % und kleiner oder gleich 200 % aufweist.

3. Sekundärbatterie mit nichtwässrigem Elektrolyt (10), umfassend eine Elektrodenanordnung (14), in der eine positive Elektrode (11) und eine negative Elektrode (12) einander mit einem dazwischen angeordneten Separator (13) gegenüberliegen, eine zylindrische Außendose mit Boden (16), die die Elektrodenanordnung (14) aufnimmt, und eine Verschlussbaugruppe (17), die eine Öffnung der Außendose (16) verschließt, wobei
die positive Elektrode (11) eine positive Elektrodenmischungsschicht, die ein Bindemittel enthält, umfasst, und die negative Elektrode (12) eine negative Elektrodenmischungsschicht, die ein Bindemittel enthält, umfasst, und
wenn die Elektrodenanordnung (14) in zwei gleiche Teile eines Halbbereichs auf der Seite der Verschlussbaugruppe (17) und eines Halbbereichs auf einer Bodenseite der Außendose (16) in der Einführrichtung in die Außendose (16) geteilt wird, in mindestens einer der positiven Elektrode (11) und der negativen Elektrode (12) der Quellungsgrad in einem Elektrolyten des in dem Halbbereich auf der Seite der Verschlussbaugruppe (17) angeordneten Bindemittels höher ist als der Quellungsgrad im Elektrolyten des in dem Halbbereich auf der Bodenseite der Außendose (16) angeordneten Bindemittels.

4. Sekundärbatterie mit nichtwässrigem Elektrolyt (10) nach Anspruch 3, wobei das in dem Halbbereich auf der Seite der Verschlussbaugruppe (17) angeordnete Bindemittel einen Quellungsgrad im Elektrolyten von größer oder gleich 150 % und kleiner oder gleich 250 % aufweist, und das in dem Halbbereich auf der Bodenseite der Außendose (16) angeordnete Bindemittel einen Quellungsgrad im Elektrolyten von größer oder gleich 100 % und kleiner oder gleich 200 % aufweist.

5. Sekundärbatterie mit nichtwässrigem Elektrolyt (10), umfassend eine Elektrodenanordnung (14), in der eine positive Elektrode (11) und eine negative Elektrode (12) einander mit einem dazwischen angeordneten Separator (13) gegenüberliegen, eine zylindrische Außendose mit Boden (16), die die Elektrodenanordnung (14) aufnimmt, und eine Verschlussbaugruppe (17), die eine Öffnung der Außendose (16) verschließt, wobei
die positive Elektrode (11) eine positive Elektrodenmischungsschicht, die ein Bindemittel enthält, umfasst, und die negative Elektrode (12) eine negative Elektrodenmischungsschicht, die ein Bindemittel enthält, umfasst, und
wenn die Elektrodenanordnung (14) in zwei gleiche Teile eines Halbbereichs auf einer Seite der Verschlussbaugruppe (17) und eines Halbbereichs auf einer Bodenseite der Außendose (16) in der Einführrichtung in die Außendose (16) geteilt wird, in mindestens einer der positiven Elektrode (11) und der negativen Elektrode (12) der Quellungsgrad in einem Elektrolyten des in dem Halbbereich auf der Bodenseite der Außendose (16) angeordneten Bindemittels höher ist als der Quellungsgrad im Elektrolyten des in dem Halbbereich auf der Seite der Verschlussbaugruppe (17) angeordneten Bindemittels.

6. Sekundärbatterie mit nichtwässrigem Elektrolyt (10) nach Anspruch 5, wobei das in dem Halbbereich auf der Bodenseite der Außendose (16) angeordnete Bindemittel einen Quellungsgrad im Elektrolyten von größer oder gleich 150 % und kleiner oder gleich 250 % aufweist, und das in dem Halbbereich auf der Seite der Verschlussbaugruppe (17) angeordnete Bindemittel einen Quellungsgrad im Elektrolyten von größer oder gleich 100 % und kleiner oder gleich 200 % aufweist.

## Revendications

1. Batterie secondaire à électrolyte non aqueux (10) comprenant un ensemble d'électrodes (14) dans lequel une électrode positive (11) et une électrode négative (12) se font face avec un séparateur (13) interposé entre elles, et un boîtier de batterie (15) qui loge l'ensemble d'électrodes (14), dans laquelle
l'électrode positive (11) comprend une couche de mélange d'électrode positive contenant un liant, et l'électrode négative (12) comprend une couche de mélange d'électrode négative contenant un liant, et
lorsque la batterie secondaire à électrolyte non aqueux (10) est utilisée dans un état fixe, et que l'ensemble d'électrodes (14) dans l'état fixe est divisé en deux parties égales, une région de la moitié supérieure (10a) et une région de la moitié inférieure (10b) dans la direction verticale, dans au moins l'une de l'électrode positive (11) et de l'électrode négative (12), le degré de gonflement dans un électrolyte du liant disposé dans la région de la moitié supérieure (10a) est supérieur au degré de gonflement dans l'électrolyte du liant disposé dans la région de la moitié inférieure (10b).

2. Batterie secondaire à électrolyte non aqueux (10) selon la revendication 1, dans laquelle le liant disposé dans la région de la moitié supérieure (10a) a un degré de gonflement dans l'électrolyte supérieur ou égal à 150 % et inférieur ou égal à 250 %, et le liant disposé dans la région de la moitié inférieure (10b) a un degré de gonflement dans l'électrolyte supérieur ou égal à 100 % et inférieur ou égal à 200 %.

3. Batterie secondaire à électrolyte non aqueux (10) comprenant un ensemble d'électrodes (14) dans lequel une électrode positive (11) et une électrode négative (12) se font face avec un séparateur (13) interposé entre elles, une boîte extérieure cylindrique à fond (16) qui loge l'ensemble d'électrodes (14), et un ensemble de scellement (17) qui ferme une ouverture de la boîte extérieure (16), dans laquelle
l'électrode positive (11) comprend une couche de mélange d'électrode positive contenant un liant, et l'électrode négative (12) comprend une couche de mélange d'électrode négative contenant un liant, et
lorsque l'ensemble d'électrodes (14) est divisé en deux parties égales, une région de la moitié du côté de l'ensemble de scellement (17) et une région de la moitié située du côté du fond de la boîte extérieure (16) dans la direction d'insertion dans la boîte extérieure (16), dans au moins l'une de l'électrode positive (11) et de l'électrode négative (12), le degré de gonflement dans un électrolyte du liant disposé dans la région de la moitié située du côté de l'ensemble de scellement (17) est supérieur au degré de gonflement dans l'électrolyte du liant disposé dans la région de la moitié située du côté du fond de la boîte extérieure (16).

4. Batterie secondaire à électrolyte non aqueux (10) selon la revendication 3, dans laquelle le liant disposé dans la région de la moitié située du côté de l'ensemble de scellement (17) a un degré de gonflement dans l'électrolyte supérieur ou égal à 150 % et inférieur ou égal à 250 %, et le liant disposé dans la région de la moitié située du côté du fond de la boîte extérieure (16) a un degré de gonflement dans l'électrolyte supérieur ou égal à 100 % et inférieur ou égal à 200 %.

5. Batterie secondaire à électrolyte non aqueux (10) comprenant un ensemble d'électrodes (14) dans lequel une électrode positive (11) et une électrode négative (12) se font face avec un séparateur (13) interposé entre elles, une boîte extérieure cylindrique à fond (16) qui loge l'ensemble d'électrodes (14), et un ensemble de scellement (17) qui ferme une ouverture de la boîte extérieure (16), dans laquelle
l'électrode positive (11) comprend une couche de mélange d'électrode positive contenant un liant, et l'électrode négative (12) comprend une couche de mélange d'électrode négative contenant un liant, et
lorsque l'ensemble d'électrodes (14) est divisé en deux parties égales, une région de la moitié du côté de l'ensemble de scellement (17) et une région de la moitié du côté du fond de la boîte extérieure (16) dans la direction d'insertion dans la boîte extérieure (16), dans au moins l'une de l'électrode positive (11) et de l'électrode négative (12), le degré de gonflement dans un électrolyte du liant disposé dans la région de la moitié du côté du fond de la boîte extérieure (16) est supérieur au degré de gonflement dans l'électrolyte du liant disposé dans la région de la moitié du côté de l'ensemble de scellement (17).

6. Batterie secondaire à électrolyte non aqueux (10) selon la revendication 5, dans laquelle le liant disposé dans la région de la moitié du côté du fond de la boîte extérieure (16) a un degré de gonflement dans l'électrolyte supérieur ou égal à 150 % et inférieur ou égal à 250 %, et le liant disposé dans la région de la moitié du côté de l'ensemble de scellement (17) a un degré de gonflement dans l'électrolyte supérieur ou égal à 100 % et inférieur ou égal à 200 %.
